# EUROPEAN PATENT APPLICATION

(11) **EP 4 023 876 A1**
(43) Date of publication of application: **06.07.2022**
(21) Application number: 19938837.2
(22) Date of filing: 23.07.2019
(51) Int. Cl.: F03B 17/06, F03B 13/26

(54) **SYSTEM AND METHOD FOR GENERATING ELECTRICAL ENERGY**

(71) Applicant: Innovación, Desarrollo y Comercialización, 18003 Granada (ES)
(72) Inventor: MIRASOL GIEB, Enrique, 18003 Granada (ES)
(74) Representative: Sahuquillo Huerta, Jesús
(86) International application number: PCT/ES2019/070515
(87) International publication number: WO 2021/014030

(57) **Abstract**

The invention relates to a system and a method for generating electrical energy at the surface by harnessing the kinetic energy of water from rivers and ocean currents, comprising a floating platform (19) on the water surface (25) which is joined to at least one vertical shaft (17) having a plurality of blades (1 to 16), where said vertical shaft (17) is configured to harness the kinetic energy generated by the flow of the river water currents and/or ocean currents beneath the water surface (25) and where said vertical shaft (17) is mechanically connected to a vertical electricity generator (22).

## Description

The present invention relates to equipment and a method for obtaining electrical energy from the capture of the kinetic energy of rivers and sea currents, as described in the claims accompanying this description.

### Technical field

The field of the technique of the present invention is framed within the energy industry sector, focusing particularly on the field of the industry dedicated to the manufacture and installation of systems, apparatus, devices, equipment, methods and/or processes for the use of clean energies and the generation of electrical energy and those applicable to the use of the kinetic energy of river and sea currents.

### State of the art of the invention

It is necessary to look for clean energies that do not disturb ecosystems and the environment and that, on the other hand, do not pollute the landscape of our planet. It is, therefore, an imperative need in the current state of the art, to develop procedures to obtain clean and non-polluting energy in a cheaper way, more respectful of the flora, fauna and aesthetics of nature than that offered by other systems.

Currently, the most widely used systems for obtaining clean energy are basically two:
(a) photovoltaic solar energy; and (b) wind energy. However, both methods significantly disrupt the flora, fauna and aesthetics of the environment in which they are installed.

Thus, photovoltaic solar energy, in large-scale fields, causes local flora and fauna to be displaced from their habitat and, of course, damages spaces and landscapes. Wind farms, on the other hand, are even more damaging. Firstly, because they damage the surrounding land during their installation, as they require very large transport and installation infrastructures. Secondly, they significantly damage the habitat of birds, as many of them are severely affected by the blades of the wind turbines. Thirdly, but not least, the visual aspect - the visual pollution - of windmills in the different landscapes is very noticeable.

In another aspect, the two energy sources referred to depend - logically - on nature to work and capture energy. Thus, photovoltaic energy depends on the hours of sunshine and wind energy on the wind and its speed. Therefore, the collection of energy depends on the weather, based on statistical models of climatological data which, by their very nature, have a very high variability.

To avoid these problems, different systems have been developed, including the use of the kinetic energy produced by the waters of rivers and sea currents to produce electrical energy. To avoid dependence on the weather to obtain more or less energy, we apply constant energy 24 hours a day, 365 days a year. We have them in sea currents and rivers, where the mass is a thousand times greater, and although the speed is lower, it is constant. Therefore, a system that can harness this energy would be desirable.

In the current state of the art, US5281856A describes an apparatus for capturing the energy contents of relatively low water currents, for example, of about one meter layer thickness and of changing level. The apparatus described in US5281856A can utilise the energy of currents present in bodies of surface water, such as river currents of even small cross-section, but with a relatively high flow velocity, tidal currents, currents of different types of advancing waves such as floods, waves, and other similar movements of the body of water. Another object of the invention is to provide an apparatus which makes use of the energy of such bodies of water at relatively low investment and operational costs, and which can convert it into form-producing work with high efficiency.

Thus, US5281856A describes a water current energy converter having at least one pumping unit comprising a hydraulic rotary pump coupled to a shaft. The floating body is held by suitable anchoring means in a predetermined orientation and in a substantially stationary position on a moving water surface, preferably in an area close to the shore of a sea or lake, or at the mouth of a river, so that changes, i.e., the rise and fall of the surface water level, are allowed to be freely followed. The hydraulic rotary pump comprises, among other parts, a hydraulic motor which is coupled to a power generator.

On the other hand, US2007020097A1 relates to turbine casings and power augmentation of prime movers, and to prime movers that harness the energy of free-flowing fluid. The invention also extends to a method for increasing the power generated from primary engines. This document describes a turbine housing comprising a housing body having a first end, a second end and a central region, wherein the housing body comprises a bore extending therethrough, and wherein the bore tapers from a first, larger cross-section at and/or in the region of the first and second ends, to a second, smaller cross-section towards the central portion.

Finally, US2017122283A1 describes a turbine system described herein provide a turbine that rotates in response to fluid flow and include a ramp device that remains relatively stationary compared to the turbine and is configured to affect fluid flow for effective power generation. The rotation of the turbine can cause a generator to output electrical power.

However, none of the documents indicated allows the use of the kinetic energy produced by the waters of rivers and marine currents to generate electrical energy and, furthermore, to eliminate the problems involved in obtaining clean energy, avoiding damage to the environment and aesthetics, considerably increasing the magnitudes of energy that can be obtained at considerably lower costs than those indicated. This problem is solved with the equipment and method of the claims that accompany this descriptive report.

### Description of the invention

An object of the present invention is an apparatus for obtaining electrical energy which, based on the installation of a set of vertical turbines whose shafts are coupled to flexible cables which tension weights submerged under a floating platform, on which a hydraulic pump is installed which is mechanically coupled to said shafts and which enables the kinetic energy of the river or marine current which moves said blades to be collected in order to convert this kinetic energy into electricity by means of a dynamo. This object is achieved with the equipment of claim 1. Further practical implementations of the invention, as well as other aspects, are described in the dependent claims of claim 1.
relevant.

The present invention is a device in which, in order to obtain electrical energy, it is based on the arrangement of a platform anchored to the seabed, and the placement of a vertical shaft which, attached to said platform, has a series of blades or propellers, whose design will be made according to the hydrodynamics that generate the best and/or greatest possible way to obtain an adequate speed with the least turbulence in its turns. In the upper part, the platform contains the rotor that transmits the rotation to a vertical generator, protected by a casing, and which, if necessary, depending on the length of the vertical axis, the whole body would have a device to minimise the lever effort.

Thanks to the equipment and method described in the claims, firstly, it is possible to obtain clean energy. Secondly, elements and systems for obtaining more ductile, cheaper, and lighter materials are used, facilitating transport, installation, handling, and maintenance. Thus, underwater shafts and blades could be made of silicone and resin, carbon painted with silicone, or any other material that is inert to the aggression of salt water. With these premises, less onerous installations will be obtained and, therefore, it will be possible to achieve the objectives with lower economic investments than those currently necessary.

Another object that is achieved with the equipment and method of the invention is to constitute an installation in the aquatic environment with materials that do not harm said ecosystem, nor its flora, nor its fauna. Furthermore, it is an installation that does not affect in anyway the aesthetics of the landscape, neither during its installation, nor during its useful life, nor in its handling or maintenance.

It is an object of the invention to use the kinetic energy of water -mass moving at a speed of approximately 1.5 m/s- which for 365 days a year provides a kinetic energy available for its transformation into electrical energy that is estimated at 10130940 Joules/year. If we compare this energy availability with wind energy, for example, we obtain that, for 3000 hours of wind per year in the Campo de Tarifa, and at an average speed of 55 km/h, it will only provide energy of 414450 Joules/year, some twenty-five times less than that provided by water.

Finally, the equipment of the invention is constituted as a protective or barrier element for the environment in which it is installed. Thus, depending on the area in which it is installed, it can become a means of protection against the undesirable effects of trawling, in such a way as to protect flora that may be in danger of extinction. Species such as Posidonia Oceanica, Zostera Marina and Zostera Nodosa, which generate large underwater meadows of great biological richness and complexity, included as habitats of special protection by the European Union and which also represent a vital space for the spawning and frying of certain endemic marine species, could be protected.

Throughout the description and the claims, the word "comprises" and variants thereof are not intended to exclude other technical features, components or steps. To those skilled in the art, other objects, advantages, and features of the invention will be apparent in part from the invention and in part from the practice of the invention. The following examples and drawings are provided by way of illustration and are not intended to restrict the present invention. Furthermore, the invention covers all possible combinations of particular and preferred embodiments indicated herein.

### Brief description of the drawings

The following is a very brief description of a series of drawings which help to better understand the invention, and which relate expressly to an embodiment of said invention, which is illustrated as a non-limiting example thereof.

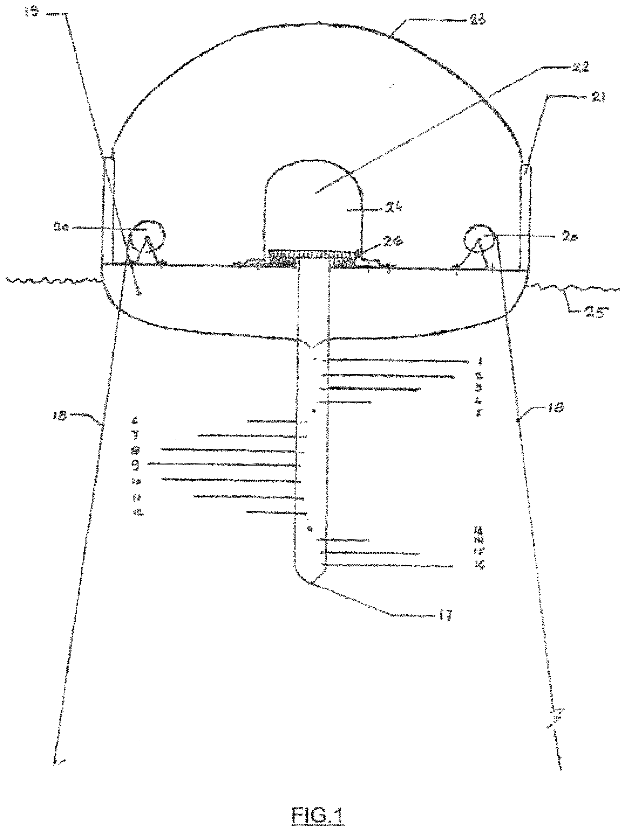

FIG.1 shows a schematic view of an example of an embodiment of the invention, where the equipment for obtaining electrical energy can be observed, showing the main parts and elements of which the invention is composed, as well as the configuration and arrangement of said parts, both on and below the surface of the water. Figure 1 shows that it comprises a vertical shaft containing a minimum of three blades or propellers, which make the shaft rotate. This shaft is located above the platform and transmits its movement to a vertical generator, which converts it into electrical energy.

The references used in FIG.1 are as follows:
1 to 16 - Paddles
17 - Transmitting shaft and blade carriers
18 - seafloor anchor cables
19 - Installation location platform
20 - Anchor collectors
21 - Platform bib
22 - Vertical electrical generator
23 - Platform cover
24 - Generator protection
25 - Water level
26 - Bearing element of the bearing set on which the rotor of the shaft rests.

### Detailed explanation of one embodiment of the invention

As can be seen in FIG.1 the equipment for obtaining electrical energy which is the subject of the present invention comprises, essentially, a vertical turbine consisting of a plurality of blades (1 to 16) -with a minimum of three- which rotate on a vertical axis (17) which solidly joins the vertical turbine with a floating platform (19), logically located on the surface of the water (25) in river or sea locations, to take advantage of the kinetic energy caused by the flow of river and sea water currents on the surface and below the surface of the water.

As indicated, the vertical turbine is connected to the platform (19) by means of a shaft (17). As is known, river courses and sea currents, whether surface or submerged, are bodies of water with a specific density, with constant or variable velocities, as well as with directional changes and which, therefore, are carriers of kinetic energy which, thanks to the blades (1 to 16) of the vertical turbine, can be harnessed, since the water current, whatever its direction - since the rotation of the shaft (17) is bidirectional - will turn the shaft (17) and the latter will drive a vertical electrical generator (22) located on the floating platform (19) which is configured to convert the kinetic energy into usable electrical energy.

In the non-limiting embodiment shown in FIG.1 the mechanical connection between the shaft (17) and the electric generator (22) is realised by means of a plurality of bearings (26).

The platform (19) is connected to the seabed by tensioning cables (18). These tensioning cables (18) are configured to hold the platform (19) in position against the thrust of the water current. For this purpose, the tensioning cables (18) are tensioned - in a practical, non-limiting embodiment - by means of weights provided at the lower end of the same. Optionally, these weights can be fixed to the sea floor or riverbed by means of modular anchors or anchors. The tensioning cables (18) are regulated by respective tensioning or retracting mechanisms (20) in such a way that they can be extended or retracted depending on whether a greater or lesser tension is desired in the cables (18) depending on the force of the water currents, in such a way that the tensioning cables (18) arranged axially with respect to the shaft (17), which must remain vertical, are sufficiently taut to withstand the thrust of the water against the blades (1 to 16) of the shaft (17), which is achieved by regulating the weight of the mooring and the floating platform (19).

On the other hand, the blades (1 to 16) are configured to rotate in the same way in one direction or the other. The purpose of this design is that, even if the direction of the current varies, it does not affect the generation of the electric current. The blades (1 to 16) are also made of a material with a certain degree of flexibility, as this optimises the energy efficiency of the assembly, since the thrust surface is increased and the resistance to water is reduced. Preferably, the blades (1 to 16) are made of silicone, a combination of silicone and resin, a combination of carbon or silicone and, in general, any other material with a certain degree of flexibility, and which, in addition, is inert to water aggression, cannot adhere to any animal, vegetable or mineral matter, does not degrade and is non-polluting.

The floating platform (19), in a particular non-limiting embodiment, incorporates a watertight cover (23) that completely covers the functional elements of the equipment provided thereon. Said watertight cover (23), in a particular embodiment, is hemispherical and has a single access or manhole (21) for use in the event of maintenance and which normally remains closed to prevent water from entering the interior. Optionally, the floating platform (19) has signalling and location elements.

It is important to point out that the assembly is notably simpler than those described in the prior art. For this, it is based on a modular and scalable concept, since, to increase the energy generated, it is simply necessary to add more devices such as the one of the inventions in series or parallel, forming an electrical generation network.

River courses, like surface or submerged sea currents, are bodies of water with a specific density, with constant or variable velocities, as well as directional changes, and which are therefore carriers of energies potentially susceptible of being used in a suitable manner. It is precisely the way in which the energy is obtained that forms the basis of the present invention. The kinetic energy possessed by both surface marine currents and river currents can be converted into electrical energy by means of the present invention.

The application of the invention in submerged marine currents could have elements for correcting the lever arm on the rotation transmission shaft (17), so that the transmission to the generator (22) is correct. In this way, only mechanical elements are available in the water, made of materials compatible with the marine environment, with a density slightly lower or like that of the water, either to facilitate their buoyancy or, due to their weight, to facilitate their maintenance, so that the work that needs to be carried out under water is as light as possible.

Basically, the invention consists of creating a floating platform (19), located within the width of the marine current, and permanently anchored to the bottom of the sea, in such a way that the current does not drag it. This platform (19) will have the most suitable shape and its dimensions will depend on the elements placed on it. In any case, it shall be covered with the most suitable materials. The platforms shall have the same characteristics, whether they are placed on the sea or on the waters of rivers. Both their dimensions and their aesthetics may vary.

On the platform we have a cylinder that acts as a shaft (17) of the appropriate diameter, which, on one side, will be below the platform (19), depending on the case, between 1 and 15 metres, and will receive from 1 to 16 horizontal blades with the most appropriate shape and length to be driven by the water which, when set in motion, will transfer this rotation to a generator (22) placed at the other end of the cylindrical shaft (17) which is at the upper level of the platform.

If it is desired to arrange several energy receivers on the same platform (19), they could be placed in such a way that the possible turbulence of one element does not harm others, being possible to vary the vertical and horizontal distances of each element, as well as their number. Thus, for example, each new element would be lowered 1.5 to 15.5 metres above the previous one, so that the blades are at different levels. The arrangement of the number of elements will determine the dimensions of the platform.

It is considered that each platform, with a surface area of around 240 square metres, should not have more than 5 or 6 energy capture units, and in this way, the work to be carried out under the platform would not exceed a depth of 15 or 20 metres. But this will depend on the size of the blades, which will determine the power we wish to obtain.

In a preferred embodiment, each energy collector must have its own generator (22) which, in this case, would be vertical since the failure of one should not condition the operation of the platform. Depending on each case, we would see the convenience of having speed regulators for its installation and having a generator every two or three elements.

The energy obtained will be transported to land in the safest way currently in use, being collected at buoys every four units. From these, and depending on the number of buoys, it would be collected to be transported to land.

In this way we will obtain (a) an optimisation of kinetic energy, and consequently a greater yield of electrical energy; (b) by carrying out a greater sectorisation of the collection points, although in principle it may cause higher costs, in the case of maintenance and breakdowns, the investment is reduced; (c) elimination of submerged electrical energy; (d) simplification and minimisation of infrastructures, reducing production and maintenance costs; (e) reduction, minimisation or elimination of environmental impacts.

The Kinetic Energy available in the sea is much higher than that generated by the wind. Thus, if we apply the densities of the masses of water and air in certain normal conditions for them, we see that for WATER it is 1,027 kilos per cubic metre while for AIR it is 1,228 kilos per cubic metre. If we apply these values to the Kinetic Energy, for the water of a current like the one coming out of the Mediterranean, with a speed of 1.5 m/second, we will have in one year a C.E. of 10.121.085 joules. Applied to the air in Tarifa, with 3,000 hours of wind per year and an average wind speed of 50K/h (13.9 m/s), we get an E.C. of 10,121,085 joules. (13.9 m/s) gives us an E.C. of 355.890 joules. A 2.700% less than water.

This means that, for a power of 50 MW, a single device, such as the one of the invention, is needed to capture only 10% of the energy from the sea currents of the Strait of Gibraltar, whereas five 10 MW wind turbines would be needed for the same power. Logically, the surface area needed for five wind turbines is much larger than that needed for the equipment of the invention, which is very important when it comes to scaling up energy production. Obtaining only 10% of the available kinetic energy, 100 MW would be obtained with a single device of this invention.

In any case, the final design of the blades (1 to 16), their dimensions, depth, and size of the floating platform (19) depend on the final installation. Therefore, the study of the platform, the blades and their anchorages must be dimensioned according to the space where they are to be located and the energy to be obtained.

In any case, as has been indicated, the use of the invention allows for increases in the performance and scalability of the equipment with no greater limitation than the space available for the installation of the equipment. Furthermore, the equipment of the invention is designed so that, in addition to the generation of clean energy, it can at the same time act as a protector of marine fauna and flora, especially in the case of the presence of endangered species, since it would act as a barrier against trawling.

It is known that Posidonia is an underwater plant that generates large meadows that serve as spawning and frying grounds for a part of the marine fauna. These meadows, today in danger of extinction because of trawling, can be protected by the invention. Part of the composition of these elements can be introduced into the marine environment without any type of contamination, so that barriers could be set up to protect these plants from trawling nets, which would prevent their destruction. At the same time, if it were made compulsory for fishing nets, with a certain frequency, to be printed with the registration number of each vessel, those who use them for this type of fishing could be located, as part of these nets, with the identification of each vessel, would remain on these barriers. If the situation of these Posidonia meadows were checked by diving teams for the protection of the marine environment, they would find the remains of the nets trapped by our protection barriers, with the location of those who used them.

This last aspect is very relevant, since the present invention, in addition to its main object related to the generation of energy, helps to protect marine biology, since marine currents are used by certain cetaceans and other fish both for their entry into the Mediterranean and for their exit. It is therefore considered that, on the outer edge of the platform, vertical rigid elements should be placed with a depth of one and a half metres greater than the length of the shaft. A mesh shall be attached to these vertical elements to prevent animals from entering the turning area.

## Claims

1. An apparatus for obtaining surface electrical energy by capturing the kinetic energy of river water and marine currents comprising a floating platform (19) on the water surface (25) which is connected to at least one vertical shaft (17) with a plurality of blades (1 to 16), wherein said vertical shaft (17) is configured for the capture of kinetic energy generated by the flow of river water currents and/or sea currents under the water surface (25) and wherein said vertical shaft (17) is mechanically connected with a vertical electric generator (22) and **characterised in that** said vertical shaft (17) and said blades (1 to 16) are configured so that the kinetic energy of river water currents and/or sea currents under the water surface (25) move the vertical shaft (17) in both directions of rotation; and wherein, furthermore, the vertical shaft (17) is mechanically connected to the vertical electric generator (22) such that such rotational motion of the vertical shaft (17) is converted into electrical energy in the vertical electric generator (22).

2. The apparatus of claim 1, wherein the platform (19) comprises at least one tensioning cable (18) attached at its upper end to a tensioning mechanism (20) located on the floating platform (19) and at its lower end to a weight configured to maintain the vertical axis (17) of kinetic energy capture in a substantially fixed position under the floating platform (19).

3. The apparatus of claim 2 wherein the substantially fixed position under the floating platform (19) is substantially perpendicular to the horizontal position defined by the floating platform (19) or has an angle of inclination with respect to the horizontal position defined by the floating platform (19).

4. The apparatus of claim 2 or 3 wherein the weights are attached by means of modular anchors to the seabed or riverbed and are configured to allow for tidal fluctuation.

5. The equipment of any one of the preceding claims, wherein the blades (1 to 16) of the shaft (17) are configured to rotate coaxially with respect to the vertical axis (17) in both directions and are made of a flexible, non-degradable and non-polluting material.

6. The apparatus of any one of the preceding claims, wherein the floating platform (19) incorporates a watertight cover (23) configured to completely cover the outer envelope of the floating platform (19) incorporating location and signalling elements.

7. A method of obtaining electrical energy on the surface by capturing the kinetic energy of river water and sea currents, comprising the steps of:
locating a floating platform (19) on the water surface (25), wherein said floating platform (19) is connected to a vertical axis (17) configured for kinetic energy harvesting, such that the flow of river water and/or sea current currents under the water surface (25) crosses said vertical axis (17) for kinetic energy harvesting;
connecting mechanically the kinetic energy harvesting vertical shaft (17) to a vertical electrical generator (22) configured to generate electrical energy when driven by said submerged vertical shaft (17); and
driving the rotary electric generator (22) by means of the vertical shaft (17) for capturing kinetic energy submerged below the surface of the water (25) due to the transverse passage of a flow of water through blades (1 to 16) coaxial with respect to the vertical shaft (4); in such a way that the kinetic energy of river water currents and/or sea currents under the surface of the water (25) drive, in any direction of rotation, at least one blade (1 to 16) of the vertical shaft (17) and jointly and severally the rotary electric generator (22).

8. The method according to claim 7, comprising the step of securing the platform (19) on the surface of the water (25) by means of at least one tensioning cable (18) attached at its upper end to a tensioning mechanism (20) located on the floating platform (19) and at its lower end to a weight configured to hold the vertical kinetic energy harvesting column in a substantially fixed position under the floating platform (19).

9. The method of claim 8 wherein the substantially fixed position under the floating platform (19) is substantially perpendicular to the horizontal position defined by the floating platform (19) or has an angle of inclination with respect to said horizontal position defined by the floating platform (19).

10. The method of claim 8 or 9, comprising attaching the weights by means of modular anchors to the seabed or riverbed.

11. The method of any one of claims 7 to 10, comprising incorporating a watertight cover (23) configured to completely cover the outer envelope of the floating platform (19).

12. The method of claim 11, comprising marking and locating the watertight housing (23).

13. Use of the equipment of any one of claims 1 to 6 for the protection of marine biology.
